# EUROPEAN PATENT SPECIFICATION

(11) **EP 1 864 579 B1**
(45) Date of publication and mention of the grant of the patent: **08.05.2013**
(21) Application number: 06729608.7
(22) Date of filing: 15.03.2006
(51) Int. Cl.: A23G 3/50, A23G 3/42, A23G 3/54, A23G 3/40

(54) **NOVEL CANDY AND PROCESS FOR PRODUCING THE SAME**
NEUARTIGE SÜSSWARE UND VERFAHREN ZU IHRER HERSTELLUNG
NOUVEAU BONBON ET SON PROCEDE DE PRODUCTION

(30) Priority: 31.03.2005 JP 2005101324
(43) Date of publication of application: 12.12.2007
(73) Proprietor: Sansei Foods Co., Ltd., Himeji-shi, Hyogo 6700992 (JP)
(72) Inventor: SAKOU, Shigeto, 6700992 (JP); OKADA, Takaaki, Hyogo 6700992 (JP); YAMAGUCHI, Satoshi, Hyogo 6700992 (JP); KOBAYASHI, Kazuhide, Hyogo 6700992 (JP)
(74) Representative: Leitner, Waldemar
(86) International application number: PCT/JP2006/305641
(87) International publication number: WO 2006/109455

(56) References cited:
- JP-A- 7 155 109
- JP-A- 10 004 885
- JP-A- 10 004 885
- JP-A- 10 179 036
- JP-A- 11 289 987
- JP-A- 2000 139 356
- JP-A- 2000 139 356
- JP-A- 2001 046 012
- JP-A- 2005 333 946

## Description

### TECHNICAL FIELD

The present invention relates to a novel candy species and a method of producing the same and, more particularly, to a novel species of candy, beautiful in shape, high in commercial value, having the feel of coolness of xylitol and good-tasting, and to a method of producing the same.

### BACKGROUND OF THE INVENTION

Xylitol is a raw material that has in recent years attracted attention in the candy industry in view of its good quality of taste and, in addition, the feel of coolness as obtainable on the occasion of tasting owing to the heat of melting of crystals thereof because of xylitol being a crystalline sugar alcohol and in view of its dental caries (tooth decay) preventing effect; and, xylitol-containing candies have also been proposed (cf. e.g. Patent Document 1).

In producing xylitol-containing candies, however, the crystallization of xylitol, namely the solidification of candies initially in a molten state, proceeds irreversibly in a very short period of time immediately after feeding of seed crystals to the components, including xylitol, in a molten state or immediately after causing fine crystals of xylitol to precipitate out by stirring, with the result that the fluidity disappears and the processability becomes poor; thus, it is impossible to mass-produce such candies continuously on a commercial scale.

For controlling the progress of rapid crystallization of xylitol, very strict temperature control is required and such control is practically very difficult in conventional commercial candy production facilities.

To avoid the above-mentioned poor processability problem, the present inventors have previously proposed a method enabling commercial-scale mass production which comprises adding sorbitol to xylitol (cf. e.g. Patent Document 2).

The method proposed comprises melting a xylitol-based composition with sorbitol incorporated therein, cooling the composition to a temperature lower than the melting point to cause crystals to precipitate out and, then, pouring the composition into molds, followed by cooling for solidification.

However, this method is difficult to carry out on a commercial scale since the slurry obtained by melting the xylitol-based composition with sorbitol incorporated therein and then cooling the melt to a temperature lower than the melting point to cause at least part of the xylitol to crystallize out is high in viscosity and unstable in spite of its initially showing fluidity, and thus poor in processability and, for maintaining the processability, the temperature must be controlled with a precision of ± 5°C. The method has another problem; namely, the crystallized xylitol obtained by depositing the above-mentioned slurry in molds, for example by pouring thereinto, followed by solidification by cooling to room temperature, cannot be molded into any desired shape but takes a deformed shape; thus, it is impossible to obtain candies beautiful in shape stably and continuously on a commercial scale.

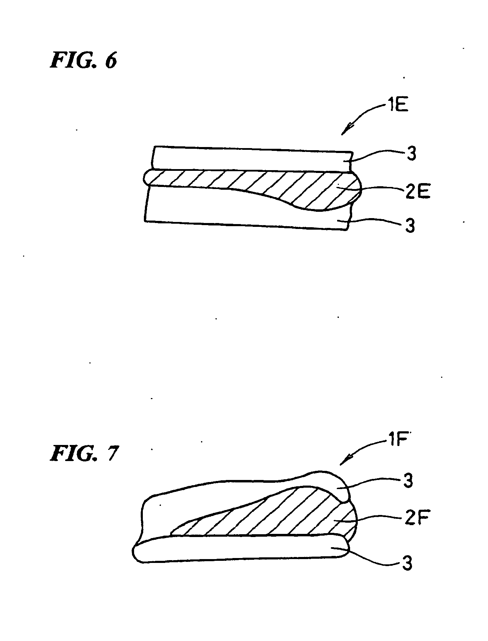

When a known candy composition is melted with stirring, deposited in a mold and a slurry obtained by incorporating sorbitol in the main component xylitol and, after mixing up by melting, allowing at least part of the xylitol to crystallize out is deposited thereon and, further, the known candy composition mixed up by melting is deposited thereon, followed by cooling to ordinary temperature for solidification, a candy 1E or 1F having a three-layer laminate structure with a xylitol crystal layer 2E sandwiched between two known candy layers 3 is obtained. However, the xylitol crystal layer 2E or 2F in the thus-obtained conventional candies 1E and 1F becomes deformed, as shown in Fig. 6 and Fig. 7; thus, any candy beautiful in shape cannot be obtained.
[Patent Document 1] Japanese Unexamined Patent (Kokai) Publication No. H09-47222
[Patent Document 2] Japanese Patent Registration No. 3460187
JP 7155109 A discloses an anticaries fondant comprising xylitol as a main component preferably in an amount of ≤ 80 wt.% and an amorphous saccharide (e.g. starch syrup) as the remaining compound. Milk sugar, fatty acid glyerol ester, edible hydrogenated oil and fat may also be included.
In JP 10004885 A, the production of a candy free of sugar alcohol obtained by mixing and dissolving palatinol, mannitol, lactitol or xylitol and/or reduced galactose syrup together with an oil and fat, table salt and emulsifier in a milk mixture composed e.g. of cow milk and adding a flavor, seasoning, sweetener having high sweetness and the like is described.

### DISCLOSURE OF INVENTION

### "Problems to be Solved by the Invention"

It is a first object of the present invention to solve the prior art problems and provide a candy species which can be obtained by molding the crystallized xylitol into a desired shape, has a beautiful shape and is good-tasting with the feel of coolness of xylitol.

A second object of the invention is to provide a method by which such candies beautiful in shape and good-tasting with the feel of coolness of xylitol can be produced easily and continuously on a commercial scale.

### "Means for Solving the Problems"

In a first aspect; the present invention, which is to accomplish the above objects, provides a novel candy as defined in claim 1 containing, xylitol as a main component and a predetermined amount of at least one component relative to the xylitol as the main component and a viscosity reducing agent, said at least one component being selected from the group consisting of a monosaccharide, a disaccharide and a sugar alcohol derived from either of them by reduction, further said candy comprising a crystal portion.

The viscosity reducing agent in the novel candy according to the first aspect of the invention is selected from edible fats and oils, food emulsifiers and a mixture thereof.

The viscosity reducing agent in the novel candy according to the invention is an edible fat or oil which may have a melting point of 35 to 80°C.

The food emulsifier in the novel candy according to the invention may have an HLB value of 0 to 8.

The novel candy contains the viscosity reducing agent in an amount of 0.01 to 20% by mass relative to the main component xylitol.

The mixing mole ratio of the above-mentioned at least one component per one mole of the main component xylitol is 0.02 to 0.3.

The manosaccharide may comprise at least one selected from the group consisting of glucose, fructose, erythrose and xylose, the disaccharide may comprise at least one selected from the group consisting of sucrose, maltose, lactose and palatinose, and the sugar alcohol may comprise at least one selected from the group consisting of sorbitol, erythritol, maltitol; reduced palatinose, lactitol and mannitol.

In an second aspect, as defined in claim 5, the invention relates to a method for producing a novel candy, comprising:
mixing and melting, either simultaneously or separately, xylitol as a main component, a viscosity reducing agent as defined in claim 5, and a predetermined amount, relative to the main component xylitol, as defined in claim 5 of at least one component selected from the group consisting of a monosaccharide, a disaccharide and a sugar alcohol derived from either of them by reduction as essential ingredients to cause the viscosity reducing agent which is added in the amount specified in claim 5 to be dispersed in the main component xylitol thereby to produce a fluid slurry allowing at least a part of the xylitol therein to be crystallized out; and depositing the fluid slurry in molds, followed by cooling the fluid slurry to an ordinary temperature for solidification so as to produce the candy comprising a xylitol crystal portion and further comprising a crystalline subsection and a noncrystalline subsection.

The above method for producing a novel candy, may comprise the following steps, as defined in claim 6:
melting and mixing a candy composition to be deposited in molds; preparing a fluid slurry by admixing a predetermined amount of at least one component selected from the group consisting of a monosaccharide, a disaccharide and a sugar alcohol derived from either of them by reduction, and a viscosity reducing agent, each as essential ingredients, either simultaneously or separately, with a main component xylitol and melting to cause the viscosity reducing agent to be dispersed in the main component xylitol and allowing at least a part of the xylitol therein to crystallize out; and depositing thus obtained fluid slurry on said candy composition, followed by cooling to an ordinary temperature for solidification to thereby produce a two-layers candy comprising a xylitol crystal portion, further comprising a crystalline subsection and a noncrystalline subsection; or melting and mixing a candy composition to be deposited in molds; preparing said fluid slurry as above; depositing thus obtained fluid slurry on said candy composition;
further depositing thereon a melted and mixed candy composition, followed by cooling to an ordinary temperature for solidification to thereby produce a three-layer candy comprising xylitol crystal portion, further comprising a crystalline subsection and a noncrystalline subsection.

### "EFFECTS OF THE INVENTION"

The novel candy according to the first aspect of the invention is characterized by its comprising a xylitol crystal layer or portion comprising, as essential constituents thereof, the main component xylitol, a predetermined amount, relative to the main component xylitol, of at least one component selected from among a monosaccharide, a disaccharide and a sugar alcohol derived from either of them by reduction, and a viscosity reducing agent.

As a result of incorporation of the viscosity reducing agent, a marked effect is produced; namely, the slurry obtained by melting the above components and cooling the molten mixture to a temperature lower than the melting point to allow at least part of the xylitol to crystallize out is reduced in viscosity and thus can be provided with stable fluidity and good processability and, when this slurry is deposited, for example by pouring into molds, and cooled to ordinary temperature for solidification, the crystallized xylitol can be molded into any desired shape, so that novel candies having a beautiful shape, giving the feel of coolness of xylitol, having a high commercial value and having a good taste can be obtained.

The viscosity reducing agent in the novel candy according to the first aspect of the invention is selected from among edible fats and oils and/or food emulsifiers, and produces further marked effects; namely, the slurry mentioned above can be reliably reduced in viscosity and can be provided with stable fluidity and good processability and, in addition, the viscosity reducing agent selected from among edible fats and oils and/or food emulsifiers can be used highly safely and is readily available and inexpensive.

The viscosity reducing agent in the novel candy according to the invention is an edible fat or oil which may have a melting point of 35 to 80°C, and produces a further marked effect; namely, since the melting point of xylitol is 94°C, the use of an edible fat or oil having a melting point within the range of 35 to 80°C as the viscosity reducing agent can reliably reduce the viscosity of the slurry mentioned above and the crystallized xylitol can be molded into any desired shape.

The food emulsifier in the novel candy according to the invention may have an HLB value of 0 to 8, and produces a further marked effect; namely, the mixability with and the dispersibility in xylitol are improved and easy dispersion in xylitol can be attained by such dispersing means as stirring.

The novel candy according to the invention contains the viscosity reducing agent in an amount of 0.01 to 20% by mass relative to the main component xylitol, and produces a further marked effect; namely, the slurry can be reliably reduced in viscosity and provided with stable fluidity and good processability.

In the novel candy according to the invention, the mixing mole ratio of the above-mentioned component per mole of the main component xylitol is 0.02 to 0.3, and produces a further marked effect; namely, xylitol can be reliably inhibited from crystallizing with excessive rapidity.

Embodiment of the invention are characterized in that, in the novel candy of the invention, the monosaccharide comprises at least one species selected from among glucose, fructose, erythrose, and xylose, the disaccharide comprises at least one species selected from among sucrose, maltose, lactose and palatinose, and the sugar alcohol comprises at least one species selected from among sorbitol, erythritol, maltitol, reduced palatinose, lactitol and mannitol, and produces further marked effects; namely, xylitol can be reliably inhibited from crystallizing with an excessive rapidity and, in addition, they are easy to handle and are readily available and inexpensive.

The second aspect of the invention relates to a method of producing novel candies which comprises that a predetermined amount of at least one component selected from among a monosaccharide, a disaccharide and a sugar alcohol derived from either of them by reduction, and a viscosity reducing agent, each as an essential ingredient, are admixed, either simultaneously or separately, with the main component xylitol by melting to cause the viscosity reducing agent to be dispersed in the main component xylitol, at least part of the xylitol is then allowed to crystallize out to give a fluid slurry, and this fluid slurry is deposited in molds and cooled to ordinary temperature for solidification to give candies each comprising a xylitol crystal layer or portion composed of crystalline subsections and noncrystalline subsections and is further characterised by the features of claim 5.

A marked effect is produced thereby; namely, novel good-tasting candies beautiful in shape, capable of giving the feel of coolness of xylitol and high in commercial value can be produced easily and continuously on a commercial scale.

Embodiments of the invention relate to a method of producing novel candies which is characterized in that a candy composition, for example a known candy composition, is melted for mixing up and then deposited in molds, a fluid slurry prepared by admixing a predetermined amount of at least one component selected from among a monosaccharide, a disaccharide, and a sugar alcohol derived from either of them by reduction, and a viscosity reducing agent, each as an essential ingredient, either simultaneously or separately, with the main component xylitol by melting to cause the viscosity reducing agent to be dispersed in the main component xylitol and allowing at least part of the xylitol to crystallize out is deposited thereon, followed by cooling to ordinary temperature for solidification to thereby produce two-layer candies each comprising a xylitol crystal layer composed of crystalline subsections and noncrystalline subsections or in that a candy composition, for example a known candy composition, is melted for mixing up and then deposited in molds, the fluid slurry mentioned above is deposited thereon and, further, a candy composition, for example a known candy composition, is melted for mixing up and then deposited thereon, followed by cooling to ordinary temperature for solidification to thereby produce three-layer candies each comprising a xylitol crystal layer composed of crystalline subsections and noncrystalline subsections and is further characterized by the features of claim 6.

It produces a marked effect; namely, novel good-tasting candies which are remarkably capable of giving that feel of coolness of xylitol owing to the endothermic effect resulting from melting of the xylitol crystal layer upon tasting in the oral cavity, which can never be obtained by mere admixing of xylitol with conventional candies, and make it possible to enjoy the taste of the laminated known candy layer(s) simultaneously or in a manner such that the organoleptic feel changes with time, for example between the start of tasting and the end thereof, and which are beautiful in shape and high in commercial value can be produced easily and continuously on a commercial scale.

### BRIEF DESCRIPTION OF THE DRAWINGS

[Fig. 1] This figure is an explanatory drawing schematically illustrating, in section, an example of the novel candy of the invention.
[Fig. 2] This figure is an explanatory drawing schematically illustrating, in section, another example of the novel candy of the invention.
[Fig. 3] This figure is an explanatory drawing schematically illustrating, in section, a further example of the novel candy of the invention.
[Fig. 4] This figure is an explanatory drawing schematically illustrating, in section, a further example of the novel candy of the invention.
[Fig. 5] This figure is an explanatory drawing schematically illustrating, in section, a still further example of the novel candy of the invention.
[Fig. 6] This figure is an explanatory drawing schematically illustrating, in section, a candy known in the art as taken by way of example.
[Fig. 7] This figure is an explanatory drawing schematically illustrating, in section, another candy known in the art as taken by way of example.

### EXPLANATION OF SYMBOLS IN THE DRAWINGS

| | |
|---|---|
| 1, 1A, 1B, 1C, 1D | Novel candy of the invention; |
| 1E, 1F | Candy of the state of the art; |
| 2, 2E, 2F | Xylitol crystal layer or portion; |
| 3 | Known candy composition layer or portion |

### BEST MODES FOR CARRYING OUT THE INVENTION

Referring to the drawings, the invention is now described in more detail with respect to several modes of embodiment thereof.

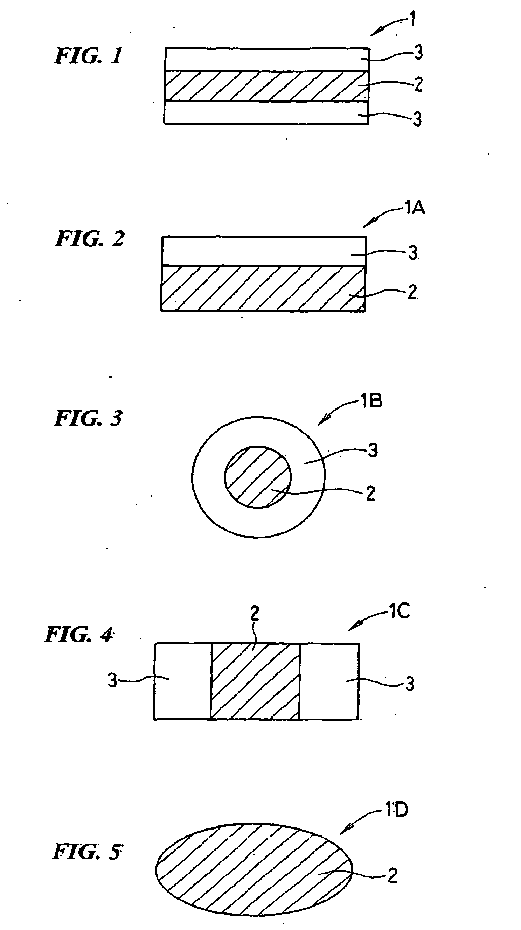

Fig 1 is an explanatory drawing schematically illustrating, in section, an example of the novel candy of the invention.

In Fig. 1, 1 indicates the novel candy of the invention, 2 indicates a xylitol crystal layer comprising, as essential constituents, the main component xylitol, a predetermined amount, relative to the main component xylitol, of at least one component selected from among monosaccharides, disaccharides, and sugar alcohols derived therefrom by reduction, and a predetermined amount, relative to the main component xylitol, of a viscosity reducing agent, and each symbol 3 indicates a known candy layer, with the xylitol crystal layer 2 being sandwiched between two known candy layers 3.

The xylitol crystal layer 2 has a desired molded shape, and the novel candy 1 of the invention has a beautiful shape of high commercial value.

Fig. 2 is an explanatory drawing schematically illustrating, in section, another example of the novel candy of the invention.

In Fig. 2, 1A indicates the novel candy of the invention, 2 indicates the same xylitol crystal layer as shown in Fig. 1, and 3 indicates the same known candy composition layer as shown in Fig. 1, with the xylitol crystal layer 2 being laminated with the known candy composition layer 3.

The xylitol crystal layer 2 has a desired molded shape, and the novel candy 1A of the invention has a beautiful shape of high commercial value.

Fig. 3 is an explanatory drawing schematically illustrating, in section, a further example of the novel candy of the invention.

In Fig. 3, 1B indicates the novel candy of the invention, 2 indicates a spherical xylitol crystal portion, and 3 indicates a known candy composition portion covering the spherical xylitol crystal portion 2.

The spherical xylitol crystal portion 1 has a desired molded shape, and the novel candy 1B of the invention has a beautiful shape of high commercial value.

Fig. 4 is an explanatory drawing schematically illustrating, in section, a further example of the novel candy of the invention.

In Fig. 4, 1C indicates the novel candy of the invention, 2 indicates a cylindrical xylitol crystal portion, and 3 indicates a cylindrical known candy composition portion covering the curved lateral surface of the cylindrical xylitol crystal portion 2.

The cylindrical xylitol crystal portion 2 has a desired molded shape, and the novel candy 1C of the invention has a beautiful shape of high commercial value.

Fig. 5 is an explanatory drawing schematically illustrating, in section, a still further example of the novel candy of the invention.

In Fig. 5, 1D indicates the novel candy of the invention which is made up of an ellipsoidal xylitol crystal portion 2 alone.

The ellipsoidal xylitol crystal portion 2 has a desired molded shape, and the novel candy 1D of the invention has a beautiful shape of high commercial value.

Fig. 6 is an explanatory drawing schematically illustrating, in section, a candy known in the art as taken by way of example.

Fig. 7 is an explanatory drawing schematically illustrating, in section, another candy known in the art as taken by way of example.

In Fig. 6 and Fig. 7, 1E and 1F indicate the respective conventional candy examples.

The present inventors made intensive investigations and, as a result, found that when a predetermined amount of at least one component selected from among monosaccharides, disaccharides and sugar alcohols derived therefrom by reduction and a viscosity reducing agent, each as an essential component, are incorporated in the main component xylitol, the slurry obtained by melting those components and thereby causing the viscosity reducing agent to be dispersed in the main component xylitol, followed by cooling to a temperature lower than the melting point to cause at least part of the xylitol to precipitate out as crystals has a reduced viscosity and can be endowed with stable long-lasting fluidity and good processability.

The crystallized xylitol obtained by depositing the above-mentioned slurry by pouring into molds, for instance, and cooling, for solidification, the same to ordinary temperature can be molded into a desired shape, so that novel good-tasting candies having a beautiful shape, giving the feel of coolness of xylitol and having a high commercial value can be obtained.

As for the saccharides to be used in the practice of the invention, monosaccharides, disaccharides and sugar alcohols, which are low in molecular weight and can be homogeneously mixed with the main component xylitol on the occasion of heating, are preferred.

The monosaccharides to be used in the practice of the invention are polyhydroxyaldehyde or polyhydroxyketone derivatives containing not less than 3 carbon atoms, including, as specific examples, glucose, fructose, erythrose, xylose, sorbose, galactose and, further, isomerized syrup, among others. While these may be used singly, a mixture of two or more of them may also be used.

The use of at least one monosaccharide selected from among grape sugar (glucose), fruit sugar (fructose), erythrose and wood sugar (xylose) is highly effective in crystallization control; they have good handleability and are readily available and inexpensive, hence are preferred.

The disaccharides to be used in the practice of the invention are polyhydroxyaldehyde or polyhydroxyketone derivatives having a form resulting from binding of two monosaccharides and, specifically, there may be mentioned sucrose, maltose, lactose, palatinose and, further, isomerized syrup, among others. While these may be used singly, a mixture of two or more of them may also be used.

The use of at least one disaccharide selected from among sugar (sucrose), which is composed of glucose and fructose bound together, malt sugar (maltose), milk sugar (lactose) and palatinose is highly effective in crystallization control; they have good handleability and are readily available and inexpensive, hence are preferred.

It is also possible to use trisaccharides and oligosaccharides, but they are high in molecular weight and the sugar solutions containing them show a high viscosity on the occasion of heating and they are less effective in lowering the crystallization temperature mentioned above, so that the level of addition thereof is limited.

The sugar alcohols to be used in the practice of the invention are chain polyhydric alcohols obtained by reduction (hydrogenation) of the aldehyde or ketone carbonyl group of sugars and, specifically, there may be mentioned, for example, sorbitol, erythritol, mannitol, galactitol, maltitol, reduced palatinose and lactitol, among others. While these may be used singly, a mixture of two or more of them may also be used. The sugar alcohols, too, show high crystallization controlling effects and are effective.

Xylitol is a sugar alcohol obtainable by subjecting the monosaccharide xylose to reduction reaction; it is as sweet as table sugar and it hardly increases the blood glucose level after eating or drinking and hardly causes dental caries. The present invention uses it in view of such characteristic features. Sugar alcohols in general show similar characteristic features.

Among the sugar alcohols, sorbitol derived from glucose by reduction reaction, mannitol as an isomer thereof, erythritol derived from erythrose by reduction reaction and like sugar alcohols derived from monosaccharides are effective in the practice of the invention. Reduced malt sugar (maltitol) derived from malt sugar (maltose) by reduction reaction, reduced palatinose derived from palatinose by reduction reaction, lactitol derived from milk sugar (lactose) by reduction reaction and the like are also effective in the practice of the invention.

When, in the practice of the invention, the mixing mole ratio of the above-mentioned components per mole of the main component xylitol exceeds 0.5, the tendency of xylitol toward crystallization is markedly impaired and such problems as increases in crystallization time, decreases in degree of crystallization and decreases in the feel of coolness arise and, therefore, the mixing mole ratio should be as low as possible and is desirably not higher than 0.3 and not lower than 0.02. When the ratio is lower than 0.02, the crystallization control may possibly become difficult whereas, at ratios exceeding 0.3, the further increases in amount bring about little merit. At ratios of 0.02-0.3, the rapid crystallization of xylitol can be reliably controlled.

Now, the viscosity reducing agent to be used in the practice of the invention is described.

A predetermined amount, relative to the main component xylitol, of at least one component selected from among a monosaccharide, a disaccharide and a sugar alcohol derived from either of them by reduction and the viscosity reducing agent to be used in accordance with the invention are incorporated, as essential components, in the candy of the invention.

The viscosity reducing agent to be used in the practice of the invention is not particularly restricted but may be any of those capable of reducing the viscosity of the slurry obtained by melting the above-mentioned components and causing the viscosity reducing agent to occur in a dispersed state in the main component xylitol, followed by cooling to a temperature lower than the melting point to allow at least part of the xylitol to crystallize out and capable of providing the slurry with stable long-term fluidity and good processability. It occurs as a liquid when xylitol is in a molten state and mixes with molten xylitol in a dispersed state. Of course, it is selected from among those safe ones approved as food additives.

At least one viscosity reducing agent selected from among edible fats and oils and food emulsifiers can reliably reduce the viscosity of he above-mentioned slurry and provide the same with stable fluidity and good processability and, in addition, is highly safe, readily available and inexpensive, hence can be preferably used.

As the edible fats and oils to be used in the practice of the invention, there may specifically be mentioned, for example, soybean oil, cotton seed oil, peanut oil, sunflower oil, safflower oil, corn oil, sesame oil, rice oil, rice bran oil, olive oil, palm oil, palm kernel oil, coconut oil, corn oil, rapeseed oil, cacao butter, linseed oil, castor oil and like vegetable fats and oils as well as beef tallow, lard, mutton tallow, goat tallow, horse fat, fish oil, milk fat, whale oil and like animal fats and oils and, further, hardened oils obtained by hydrogenation of such edible fats and oils. While these may be used singly, a mixture of two or more of them may also be used.

As the food emulsifier to be used in the practice of the invention, there may specifically be mentioned, for example, sucrose fatty acid esters, glycerol fatty acid esters, sorbitan fatty acid esters, propylene glycol fatty acid esters, and lecithins. While these may be used singly, a mixture of two or more of them may also be used.

As the viscosity reducing agent to be used in the practice of the invention, use may also be made of a combination of such a fat or oil as mentioned above and such a food emulsifier as mentioned above.

Since the melting point of xylitol is 94°C, the use of an edible fat or oil having a melting point of 35-80°C as the viscosity reducing agent in the practice of the invention can result in a reliable reduction in the viscosity of the above-mentioned slurry and can provide the same with stable long-term fluidity and good processability, hence is preferred.

While edible fats and oils having a melting point not higher than 80°C can reliable reduce the viscosity of the slurry mentioned above, hardened oils having a melting.point of 35-40°C can be more preferably used since candies giving a good mouth-feel upon melting can be produced by using them.

When the food emulsifier to be used in the practice of the invention has an HLB value of 0-8, its mixability with and dispersibility in xylitol are improved and it can be dispersed with ease in xylitol by such a dispersing means as stirring and can reliably reduce the viscosity of the slurry obtained and provide the same with stable long-term fluidity and good processability, hence such a food emulsifier can suitably be used.

If the food emulsifier has an HLB value higher than 8 and therefore is hydrophilic, the food emulsifier will be dissolved in the water-soluble component (saccharide), possibly leading to failure to obtain the effect of reducing the viscosity of the above-mentioned slurry.

When a food emulsifier alone is used, a food emulsifier having an HLB value of 3 to 8 is preferably used since such emulsifier shows improved dispersibility in xylitol and facilitates the operation using such a dispersing means as stirring.

In the practice of the invention, the viscosity of the above-mentioned slurry can be reliably reduced and the slurry can be provided with stably fluidity and good processability by causing the viscosity reducing agent mentioned above to be contained in the slurry in an amount of 0.01 to 20% by mass, preferably 1 to 10% by mass, more preferably 0.5 to 5% by mass, relative to the main component xylitol.

When the content of the viscosity reducing agent is lower than 0.01% by mass, it is difficult to reliably reduce the viscosity of the above-mentioned slurry and, when it exceeds 20% by mass, the odor of an edible saccharide or food emulsifier emanates and the quality of taste is unfavorably affected thereby.

The descriptions of and the standards for the monosaccharides, disaccharides, sugar alcohols, xylitol, viscosity reducing agents and other ingredients to be used in the practice of the invention are given and prescribed, respectively as foods or food additives, in a notification of the Ministry of Health and Welfare, entitled "Standards for Foods, Additives, etc." They are commercially available in the form of solids or liquids (aqueous solutions) and any of them can be used.

As for the ingredients other than xylitol and the above-mentioned components and viscosity reducing agent, they are not particularly restricted but include those used in producing conventional candies, for example souring agents, aromas or fragrances, colorants, fruit juices, dairy products and various medicinally active ingredients. However, the level of addition thereof should be within such a range that the crystallization of xylitol will never be affected.

The method of producing the novel candy species of the invention is not particularly restricted. Specifically, the following methods may be mentioned.
(1) The respective components are melted by heating, the viscosity reducing agent is added to the components in a molten state to thereby cause the viscosity reducing agent to occur in a dispersed state in the main component xylitol, the crystallization of xylitol, among others, is allowed to proceed to convert the mixture to a fluid slurry or, alternatively, the viscosity reducing agent is added to the components in a molten state to thereby cause the viscosity reducing agent to exist in a dispersed state in the main component xylitol, the crystallization of xylitol is allowed to proceed while causing minute crystals to precipitate out under stirring to give a fluid slurry; thereafter, the resulting slurry is molded into a desired shape, followed by cooling for solidification.
(2) The respective components mentioned above, including the viscosity reducing agent, are melted by heating to thereby cause the viscosity reducing agent to occur in a dispersed state in the main component xylitol, the molten mass obtained is maintained at a temperature lower than the melting point of xylitol but allowing the mass to maintain its fluidity to thereby allow at least part of xylitol to crystallize out to give a fluid slurry, this fluid slurry is then molded into a desired shape and the moldings obtained are cooled to room temperature.

For producing the novel candy species of the invention by the above method (2), the above-mentioned components, including the viscosity reducing agent, are first put into a molten state to cause the viscosity reducing agent to exist in a dispersed state in the main component xylitol. On that occasion, xylitol in a powder form and the saccharide are mixed together and the mixture is melted by heating, followed by addition of the remaining other component(s) or, alternatively, the saccharide in the form of an aqueous solution and an adequate amount of water are admixed with xylitol in powder form, the mixture is melted by heating and the water is evaporated by further heating and vacuum concentration, followed by addition of the other component(s). In either case, it is only required that the respective components be uniformly mixed up and be in a molten state.

Then, the composition in a molten state is cooled to a temperature below the melting point of xylitol to thereby allow at least part of the xylitol contained therein to crystallize out, whereby a fluid slurry showing good processability is obtained. The optimum temperature at which crystals are allowed to precipitate out varies depending on the saccharide species and the content thereof relative to the xylitol content. Roughly, however, the range of about 60 to 85°C is appropriate. When at least part of the xylitol contained in the composition is caused to crystallize out to give a fluid slurry excellent in processability and the slurry is then maintained at a temperature of about 60 to 85°C, the proportion of the crystal portion is maintained in a constant range and the slurry can retain its fluidity for a long period of time allowing itself to be freely molded into pieces of the candy of the invention with an arbitrary shape. A predetermined manner of molding is carried out using this fluid slurry, and the subsequent cooling after molding to room temperature causes rapid solidification.

The method of molding to give pieces of the novel candy of the invention is not particularly restricted but the slurry is very suited for the molding method comprising pouring the same into molds since the fluid slurry excellent in processability as prepared by causing at least part of the xylitol contained in the composition to crystallize out can retain a sufficient level of fluidity while adequate warmth is kept. The technique of pattern pressing following the molding by pouring, for instance, can be employed as an alternative method of molding.

### EXAMPLES

The following examples and comparative examples illustrate the present invention in detail. These examples are, however, by no means limitative of the scope of the invention unless there is a deviation from the spirit of the invention.

### (Example 1)

A commercial grade of crystalline xylitol (trademark "Xylitol C", product of Culter Food Science, Inc.; 285 g) and 15 g of sorbitol (trademark: "Sorbit W-Powder", product of Towa Chemical Industry Co., Ltd.), each in powder form, were mixed up, and the resulting mixture was melted by heating to 120°C.

To this melt was added 0.9 g of a sucrose fatty acid ester (trademark: "S-370", HLB = 3, product of Mitsubishi-Kagaku Foods Corporation) to cause the sucrose fatty acid ester to occur in a dispersed state in the main component xylitol.

This sugar melt was cooled to 90°C, 15 g of xylitol in powder form (trademark: "Xylitol CM", product of Culter Food Science, Inc.) was added, and the whole was thoroughly stirred, whereupon xylitol crystals precipitated out and a fluid slurry was obtained.

This fluid slurry was maintained at 90°C and, after 15 minutes of stirring, the viscosity thereof was measured. For the viscosity measurement, Viscotester VT-04 (Rion Co., Ltd.) was used. The measurement result is shown in Table 1.

This fluid slurry could retain its flowable state for a long period of time.

This fluid slurry was poured into silicone rubber molds and, after 5 minutes of cooling at 20°C, the molded articles were taken out of the molds to give novel candies according to the invention.

For each of the thus-obtained novel candies of the invention, the xylitol crystal portion was found to have been molded in a desired shape, and each candy piece had a beautiful shape, gave the feel of coolness of xylitol, was of high commercial value, and tasted good.

### (Example 2)

Novel candies according to the invention were obtained by following the procedure of Example 1 in the same manner except that 0.9 g of a polyglycerol fatty acid ester (trademark: "Ryoto Polygly Ester ER-60D", HLB = 5, product of Mitsubishi-Kagaku Foods Corporation) was used as the viscosity reducing agent. The viscosity measurement was carried out in the same manner; the measurement result was as shown in Table 1. The fluid slurry obtained could retain its flowable state for a long period of time.

For each of the thus-obtained novel candies of the invention, the xylitol crystal portion was found to have been molded in a desired shape, and each candy piece had a beautiful shape, gave the feel of coolness of xylitol, was of high commercial value, and tasted good.

### (Example 3)

Novel candies according to the invention were obtained by following the procedure of Example 1 in the same manner except that 0.9 g of a monoglycerol fatty acid ester (trademark: "Emaruji HRO", HLB = 4, product of Riken Vitamin Co., Ltd.) was used as the viscosity reducing agent. The viscosity measurement was carried out in the same manner; the measurement result was as shown in Table 1. The fluid slurry obtained could retain its flowable state for a long period of time. For each of the thus-obtained novel candies of the invention, the xylitol crystal portion was found to have been molded in a desired shape, and each candy piece had a beautiful shape, gave the feel of coolness of xylitol, was of high commercial value, and tasted good.

### (Example 4)

Novel candies according to the invention were obtained by following the procedure of Example 1 in the same manner except that a mixture of 0.5 g of a sucrose fatty acid ester (trademark: "S-370", HLB = 3, product of Mitsubishi-Kagaku Foods Corporation) and 0.4 g of another sucrose fatty acid ester (trademark: "S-770", HLB = 7, product of Mitsubishi-Kagaku Foods Corporation) was used as the viscosity reducing agent. The viscosity measurement was-carried out in the same manner; the measurement result was as shown in Table 1. The fluid slurry obtained could retain its flowable state for a long period of time.

For each of the thus-obtained novel candies of the invention, the xylitol crystal portion was found to have been molded in a desired shape, and each candy piece had a beautiful shape, gave the feel of coolness of xylitol, was of high commercial value, and tasted good.

### (Example 5)

Novel candies according to the invention were obtained by following the procedure of Example 1 in the same manner except that 0.9 g of Econa LS (H) (an edible oil, product of Kao Corporation, melting point 42°C) was used as the viscosity reducing agent. The viscosity measurement was carried out in the same manner; the measurement result was as shown in Table 1. The fluid slurry obtained could retain its flowable state for a long period of time.

For each of the thus-obtained novel candies of the invention, the xylitol crystal portion was found to have been molded in a desired shape, and each candy piece had a beautiful shape, gave the feel of coolness of xylitol, was of high commercial value, and tasted good.

### (Example 6)

Novel candies according to the invention were obtained by following the procedure of Example 1 in the same manner except that a mixture of 0.5 g of a sucrose fatty acid ester (trademark: "S-370", HLB = 3, product of Mitsubishi-Kagaku Foods Corporation) and 0.4 g of Econa LS (H) (product of Kao Corporation, melting point 42°C) was used as the viscosity reducing agent. The viscosity measurement was carried out in the same manner; the measurement result was as shown in Table 1. The fluid slurry obtained could retain its flowable state for a long period of time.

For each of the thus-obtained novel candies of the invention, the xylitol crystal portion was found to have been molded in a desired shape, and each candy piece had a beautiful shape, gave the feel of coolness of xylitol, was of high commercial value, and tasted good.

### (Example 7)

A 240-g portion of the same xylitol as used in Example 1 and 60 g of the same sorbitol as used in Example 1 were subjected to powder mixing, and the mixture was melted by heating to 120°C.

To this melt was added 0.9 g of a sucrose fatty acid ester (trademark: "S-370", HLB = 3, product of Mitsubishi-Kagaku Foods Corporation) as the viscosity reducing agent.

This sugar melt was cooled to 80°C, 15 g of xylitol in powder form (trademark: "Xylitol CM", product of Culter Food Science, Inc.) was added, and the whole was thoroughly stirred, whereupon xylitol crystals precipitated out and a fluid slurry was obtained.

This fluid slurry was maintained at 80°C and, after 15 minutes of stirring, the viscosity thereof was measured. For the viscosity measurement, Viscotester VT-04 (Rion Co., Ltd.) was used. The measurement result is shown in Table 2.

This fluid slurry could retain its flowable state for a long period of time.

This fluid slurry was poured into silicone rubber molds and, after 5 minutes of cooling at 20°C, the molded articles were taken out of the molds to give novel candies according to the invention.

For each of the thus-obtained novel candies of the invention, the xylitol crystal portion was found to have been molded in a desired shape, and each candy piece had a beautiful shape, gave the feel of coolness of xylitol, was of high commercial value, and tasted good.

### (Example 8)

Novel candies according to the invention were obtained by following the procedure of Example 7 in the same manner except that 0.9 g of a polyglycerol fatty acid ester (trademark: "Ryoto Polygly Ester ER-60D", HLB = 5, product of Mitsubishi-Kagaku Foods Corporation) was used as the viscosity reducing agent. The viscosity measurement was carried out in the same manner; the measurement result was as shown in Table 2. The fluid slurry obtained could retain its flowable state for a long period of time.

For each of the thus-obtained novel candies of the invention, the xylitol crystal portion was found to have been molded in a desired shape, and each candy piece had a beautiful shape, gave the feel of coolness of xylitol, was of high commercial value, and tasted good.

### (Example 9)

Novel candies according to the invention were obtained by following the procedure of Example 7 in the same manner except that 0.9 g of a monoglycerol fatty acid ester (trademark: "Emaruji HRO", HLB = 4, product of Riken Vitamin Co., Ltd.) was used as the viscosity reducing agent. The viscosity measurement was carried out in the same manner; the measurement result was as shown in Table 2. The fluid slurry obtained could retain its flowable state for a long period of time. For each of the thus-obtained novel candies of the invention, the xylitol crystal portion was found to have been molded in a desired shape, and each candy piece had a beautiful shape, gave the feel of coolness of xylitol, was of high commercial value, and tasted good.

### (Comparative Example 1)

The procedure of Example 1 was followed in the same manner except that the addition of the viscosity reducing agent was omitted. The viscosity measurement was carried out in the same manner; the measurement result was as shown in Table 1. In spite of attempts to obtain candies in the same manner as in Example 1, the crystallization proceeded after viscosity measurement and a no-fluidity state resulted and, thus, it was difficult to obtain candies by the pouring method.

### (Comparative Example 2)

The procedure of Example 7 was followed in the same manner except that the addition of the viscosity reducing agent was omitted. The viscosity measurement was carried out in the same manner; the measurement result was as shown in Table 2. In spite of attempts to obtain candies in the same manner as in Example 7, the crystallization proceeded after viscosity measurement and a no-fluidity state resulted and, thus, it was difficult to obtain candies by the pouring method.

**[Table 1]**

| | Viscosity (cP) |
|---|---|
| Example 1 | 1500 |
| Example 2 | 1800 |
| Example 3 | 2100 |
| Example 4 | 1800 |
| Example 5 | 2400 |
| Example 6 | 2000 |
| Comparative Example 1 | 6000 |

**[Table 2]**

| | Viscosity (cP) |
|---|---|
| Example 7 | 7000 |
| Example 8 | 6000 |
| Example 9 | 7000 |
| Comparative Example 2 | 11000 |

### INDUSTRIAL APPLICABILITY

As a result of incorporation of a viscosity reducing agent, the novel candy species of the invention has a beautiful shape and at the same time gives the feel of coolness of xylitol, is of high commercial value, and tastes good since such a viscosity reducing agent does not markedly affect the sweetness or flavor of saccharides. This is because the slurry obtained by melting the respective components to cause the viscosity reducing agent to occur in a dispersed state in the main component xylitol and then cooling the mix to a temperature lower than the melting point to allow at least part of the xylitol to crystallize out has a reduced viscosity as well as stable fluidity and good processability and, when this slurry is deposited by pouring into molds, for instance, and then cooled to ordinary temperature for solidification, the crystallized xylitol assumes a desired molded shape. Thus, the invention has a wide range of application in the food industry and is of high use value.

The production method of the invention produces marked effects, making it possible to produce candies having a beautiful shape and at the same time giving the feel of coolness of xylitol, being of high commercial value and tasting good easily and continuously on a commercial scale, hence is of high use value.

## Claims

1. Candy, **characterized in that** it comprises a xylitol crystal layer or portion comprising at least one component selected from a monosaccharide, a disaccharide and a sugar alcohol derived from either of the monosaccharide or the disaccharide by reduction, and a viscosity reducing agent which is selected from among edible fats and oils and/or food emulsifiers, wherein the mixing mole ratio of the above-mentioned component per mole xylitol is 0.02-0.3, and wherein the candy contains the viscosity reducing agent is an amount of 0.01-20% by mass relative to the xylitol.

2. A candy as set forth in Claim 1, wherein the viscosity reducing agent is an edible fat and oil having a melting point of 35-80 °C.

3. A candy as set forth in Claim 2 or 3, wherein the food emulsifier has an HLB value of 0-8.

4. A candy as set forth in any one of Claims 1-3, wherein the monosaccharide comprises at least one selected from the group consisting of glucose, fructose, erythrose and xylose, the disaccharide comprises at least one selected from the group consisting of sucrose, maltose, lactose and palatinose, and the sugar alcohol comprises at least one selected from the group consisting of sorbitol, erythritol, maltitol, reduced palatinose, lactitol and mannitol.

5. A method for producing a candy, **characterized in that** at least one component selected from among a monosaccharide, a disaccharide and a sugar alcohol derived from either of the monosaccharide or the disaccharide by reduction, and a viscosity reducing agent which is selected from among edible fats and oils and/or food emulsifiers are admixed, where the mixing mole ratio of the above-mentioned component per mole of the xylitol is 0.02-0.3, either simultaneously or separately, with the xylitol by melting to cause the viscosity reducing agent to be dispersed in the xylitol at least a part of the xylitol is then allowed to crystallize out to give a fluid slurry, and this fluid slurry is deposited in molds and cooled to room temperature for solidification to give candies each comprising a xylitol crystal portion composed of crystalline subsections and a noncrystalline subsections, wherein the viscosity reducing agent is added in an amount of 0.01-20% by mass relative to the xylitol.

6. The method according to claim 5, **characterized in that** a candy composition is melted for mixing up and then deposited in molds, a fluid slurry prepared by admixing a predetermined amount, relative to the main component xylitol, of at least one component selected from among a monosaccharide, a disaccharide and a sugar alcohol derived from either of the monosaccharide or the disaccharide by reduction, and a viscosity reducing agent which is selected from among edible fats and oils and/or food emulsifiers, where the mixing mole ratio of the above-mentioned component per mole of the xylitol is 0.02-0.3, either simultaneously or separately, with the xylitol by melting to cause the viscosity reducing agent to be dispersed in the xylitol and allowing at least a part of the xylitol to crystallize out is deposited thereon, followed by cooling to room temperature for solidification to thereby produce two-layer candies each comprising a xylitol crystal portion composed of crystalline subsections and a noncrystalline subsections or **in that** the candy composition is melted for mixing up and then deposited in molds, the fluid slurry mentioned above is deposited thereon and further, a candy composition melted for mixing up is deposited thereon, followed by cooling to ordinary temperature for solidification to thereby produce three-layer candies each comprising a xylitol crystal layer composed of crystalline subsections and a non-crystalline subsections.

## Patentansprüche

1. Bonbon, **dadurch gekennzeichnet, dass** es eine(n) Xylit-Kristallschicht oder -teil umfasst, die bzw. der mindestens eine Komponente, die aus einem Monosaccharid, einem Disaccharid und einem Zuckeralkohol ausgewählt ist, der entweder von dem Monosaccharid oder dem Disaccharid durch Reduktion abstammt, und ein viskositätsverringerndes Mittel umfasst, das aus essbaren Fetten und Ölen und/oder Nahrungsmittelemulgatoren ausgewählt ist, wobei das Misch-Molverhältnis der oben erwähnten Komponente pro Mol Xylit 0,02 - 0,3 beträgt und wobei das Bonbon das viskositätsverringernde Mittel in einer Menge von 0,01 - 20 Masse% relativ zu dem Xylit enthält.

2. Bonbon nach Anspruch 1, bei dem das viskositätsverringernde Mittel ein essbares Fett und Öl mit einem Schmelzpunkt von 35 - 80 °C ist.

3. Bonbon nach Anspruch 2 oder 3, bei dem der Nahrungsmittelemulgator einen HLB-Wert von 0 - 8 aufweist.

4. Bonbon nach irgendeinem der Ansprüche 1 - 3, bei dem das Monosaccharid mindestens eines umfasst, das aus der Gruppe ausgewählt ist, die aus Glucose, Fructose, Erythrose und Xylose besteht, das Disaccharid mindestens eines umfasst, das aus der Gruppe ausgewählt ist, die aus Saccharose, Maltose, Lactose und Palatinose besteht, und der Zuckeralkohol mindestens einen umfasst, das aus der Gruppe ausgewählt ist, der aus Sorbit, Erythrit, Maltit, reduzierter Palatinose, Lactit und Mannit besteht.

5. Verfahren zur Herstellung eines Bonbons, **dadurch gekennzeichnet, dass** mindestens eine Komponente, die aus einem Monosaccharid, einem Disaccharid und einem Zuckeralkohol, der entweder von dem Monosaccharid oder dem Disaccharid durch Reduktion abstammt, und ein viskositätsverringerndes Mittel, das aus essbaren Fetten und Ölen und/oder Nahrungsmittelemulgatoren ausgewählt ist, entweder gleichzeitig oder getrennt durch Schmelzen mit dem Xylit gemischt werden, wobei das Molverhältnis der oben erwähnten Komponente pro Mol des Xylits 0,02 - 0,3 beträgt, um zu bewirken, dass das viskositätsverringernde Mittel in dem Xylit dispergiert wird, mindestens ein Teil des Xylits dann auskristallisieren gelassen wird, was eine flüssige Aufschlämmung ergibt, und diese flüssige Aufschlämmung in Formen abgeschieden und zur Verfestigung auf Raumtemperatur abgekühlt wird, um Bonbons zu ergeben, die jeweils einen Xylit-Kristallteil umfassen, der aus kristallinen Unterabschnitten und nicht-kristallinen Unterabschnitten zusammengesetzt ist, wobei das viskositätsverringernde Mittel in einer Menge von 0,01 - 20 Masse% relativ zu dem Xylit zugesetzt wird.

6. Verfahren nach Anspruch 5, **dadurch gekennzeichnet, dass** die Bonbon-Zusammensetzung zum Vermischen geschmolzen und dann in Formen abgeschieden wird, eine flüssige Aufschlämmung, die hergestellt wird durch Mischen einer vorbestimmten Menge, relativ zu der Hauptkomponente Xylit, mindestens einer Komponente, die aus einem Monosaccharid, einem Disaccharid und einem Zuckeralkohol ausgewählt ist, der entweder von dem Monosaccharid oder dem Disaccharid durch Reduktion abstammt, und eines viskositätsverringernden Mittels, das aus essbaren Fetten und Ölen und/oder Nahrungsmittelemulgatoren ausgewählt ist, entweder gleichzeitig oder getrennt mit dem Xylit durch Schmelzen, um zu bewirken, dass das viskositätsverringernde Mittel in dem Xylit dispergiert wird, und Erlauben, dass zumindest eines Teil Xylits auskristallisiert, wobei das Misch-Molverhältnis der oben erwähnten Komponente pro Mol des Xylits 0,02 - 0,3 beträgt, darauf abgeschieden wird, gefolgt vom Abkühlen auf Raumtemperatur für die Verfestigung, um dadurch zweischichtige Bonbons herzustellen, von denen jedes einen Xylit-Kristallteil umfasst, der aus kristallinen Unterabschnitten und nicht-kristallinen Unterabschnitten zusammengesetzt ist, oder dadurch, dass die Bonbon-Zusammensetzung zum Vermischen geschmolzen und dann in Formen abgeschieden wird, die oben erwähnte flüssige Aufschlämmung darauf abgeschieden wird und weiter eine Bonbon-Zusammensetzung, die zum Vermischen geschmolzen wird, darauf abgeschieden wird, gefolgt vom Abkühlen auf gewöhnliche Temperatur zur Verfestigung, um daraus dreischichtige Bonbons herzustellen, von denen jedes eine Xylit-Kristallschicht umfasst, die aus kristallinen Unterabschnitten und nicht-kristallinen Unterabschnitten zusammengesetzt ist.

## Revendications

1. Bonbon, **caractérisé en ce qu'**il comprend une couche de cristaux de xylitol ou une partie comprenant au moins un composant choisi parmi un monosaccharide, un disaccharide et un dérivé d'alcool de sucre provenant du monosaccharide ou du disaccharide par réduction, et un agent de réduction de viscosité qui est choisi parmi les matières grasses et les huiles comestibles et/ou les émulsifiants alimentaires, dans lequel le rapport en moles de mélange du composant mentionné ci-dessus par mole de xylitol est de 0,02 à 0,3, et dans lequel le bonbon comprend l'agent de réduction de viscosité en une quantité de 0,01 à 20% en poids par rapport au xylitol.

2. Bonbon selon la revendication 1, dans lequel l'agent de réduction de viscosité est une matière grasse et une huile comestible ayant un point de fusion de 35 à 80°C.

3. Bonbon selon la revendication 2 ou 3, dans lequel l'émulsifiant alimentaire a une valeur HLB de 0 à 8.

4. Bonbon selon l'une quelconque des revendications 1 à 3, dans lequel :
- le monosaccharide comprend au moins un élément choisi dans le groupe constitué par : le glucose, le fructose, l'érythrose et le xylose ;
- le disaccharide comprend au moins un élément choisi dans le groupe constitué par : le saccharose, le maltose, le lactose et le palatinose ;
et l'alcool de sucre comprend au moins un élément choisi dans le groupe constitué par : le sorbitol, l'érythritol, le maltitol, le palatinose réduit, le lactitol et le mannitol.

5. Procédé de production d'un bonbon, **caractérisé en ce qu'**au moins un composant choisi parmi un monosaccharide, un disaccharide et un dérivé d'alcool de sucre provenant du monosaccharide ou du disaccharide par réduction, et un agent de réduction de viscosité qui est choisi parmi les matières grasses et les huiles comestibles et/ou les émulsifiants alimentaires sont mélangés, dans lequel le rapport en moles de mélange du composant mentionné ci-dessus par mole de xylitol est de 0,02 à 0,3, de manière simultanée ou séparée, avec ledit xylitol par fusion pour provoquer la dispersion de l'agent de réduction de viscosité dans le xylitol, au moins une partie du xylitol est ensuite cristallisée pour donner une suspension fluide, et cette suspension fluide est déposée dans des moules et refroidie à température ambiante pour solidification afin de donner des bonbons comprenant chacun une partie de cristaux de xylitol se composant de sous-sections cristallines et de sous-sections non cristallines, dans lequel l'agent de réduction de viscosité est ajouté en une quantité de 0,01 à 20% en poids par rapport au xylitol.

6. Procédé selon la revendication 5, **caractérisé en ce qu'**une composition de bonbon est fondue pour le mélange, puis le dépôt dans des moules, une suspension fluide préparée par mélange d'une quantité prédéterminée, par rapport au xylitol en tant que composant principal, d'au moins un composant choisi parmi un monosaccharide, un disaccharide et un dérivé d'alcool de sucre provenant du monosaccharide ou du disaccharide par réduction, et d'un agent de réduction de viscosité qui est choisi parmi les matières grasses et les huiles comestibles et/ou les émulsifiants alimentaires, dans lequel le rapport en moles de mélange du composant mentionné ci-dessus par mole de xylitol est de 0,02 à 0,3, de manière simultanée ou séparée, avec ledit xylitol par fusion pour provoquer la dispersion de l'agent de réduction de viscosité dans le xylitol et en permettant le cristallisation d'au moins une partie du xylitol est déposée sur celle-ci, suivi par un refroidissement à température ambiante pour solidification afin de produire des bonbons à deux couches comprenant chacun une partie de cristaux de xylitol se composant de sous-sections cristallines et de sous-sections non cristallines, ou en ce que la composition de bonbon est fondue pour mélange, puis dépôt dans des moules, la suspension fluide mentionnée ci-dessus est déposée sur celle-ci et en outre, une composition de bonbon fondue par mélange est déposée sur celle-ci, suivi par un refroidissement à température ambiante pour solidification afin de produire des bonbons à trois couches comprenant chacun une couche de cristaux de xylitol se composant de sous-sections cristallines et de sous-sections non cristallines.
